## Europäisches Patentamt
## European Patent Office
## Office européen des brevets

(19)

(11) Veröffentlichungsnummer: **0 084 156**
**B1**

(12) # EUROPÄISCHE PATENTSCHRIFT

(45) Veröffentlichungstag der Patentschrift:
18.03.87

(21) Anmeldenummer: **82111882.5**

(22) Anmeldetag: **21.12.82**

(51) Int. Cl.⁴: **H 02 P 6/02, H 02 K 29/06**

(54) **Kollektorloser Gleichstrommotor.**

(30) Priorität: **23.12.81 DE 3150922**
**23.12.81 DE 3150923**

(43) Veröffentlichungstag der Anmeldung:
**27.07.83 Patentblatt 83/30**

(45) Bekanntmachung des Hinweises auf die Patenterteilung:
**18.03.87 Patentblatt 87/12**

(84) Benannte Vertragsstaaten:
**DE FR GB IT SE**

(56) Entgegenhaltungen:
**EP-A-0 040 484**
**DE-A-2 718 428**
**DE-A-3 044 056**
**GB-A-2 071 939**

(73) Patentinhaber: **PAPST- MOTOREN GmbH & Co.**
**KG, Karl- Maier- Strasse 1 Postfach 35, D-7742 St.**
**Georgen/Schwarzwald 1 (DE)**

(72) Erfinder: **Müller, Rolf, Dr.- Ing., Ackerstrasse 13,**
**D-7742 St. Georgen (DE)**

(74) Vertreter: **Raible, Hans, Dipl.- Ing., Lenbachstrasse**
**32, D-7000 Stuttgart 1 (DE)**

**Beschreibung**

Die Erfindung betrifft einen kollektorlosen Gleichstrommotor, mit einer Statorwicklung, welche mindestens einen Strang aufweist, mit einem permanentmagnetischen Rotor, mit einer Rotorstellungssensoranordnung, und mit einer zum Steuern der Bestromung der Statorwicklung dienenden Halbleiteranordnung, welche mindestens zwei Schaltglieder aufweist, die abhängig von der Stellung des Rotors kommutiert werden, um den mindestens einen Strang in Abhängigkeit von der Rotorstellung zu bestromen, wobei jeweils zwischen zwei aufeinanderfolgenden Stromimpulsen eine Stromlücke erzeugt wird, und mit den Schaltgliedern zugeordneten Treiberstufen.

Ein solcher Motor ist bekannt aus der DE - A - 3 044 056 der Patentinhaberin. Bei diesem Motor, dessen Statorwicklung über eine Vollbrückenschaltung mit Strom versorgt wird, werden mit der Drehung des Rotors synchrone, zeitlich versetzte erste Impulsfolgen mit steilen Flanken und zweite, über Verzögerungsglieder geführte Impulsfolgen mit weniger steilen Flanken erzeugt. Diese Impulsfolgen werden so logisch miteinander verknüpft, daß jeweils die beiden leitenden Leistungstransistoren der einen Brückendiagonalen sperren können, bevor die beiden Leistungstransistoren der anderen Brückendiagonalen leitend werden. Diese bekannte Schaltungsanordnung arbeitet vorzüglich, erfordert aber relativ viele Bauelemente.

Aus der GB - A - 2 071 939 kennt man eine Treiberschaltung für einen Strang eines kollektorlosen Motors. Diese Treiberschaltung wird über ein Rechtecksignal angesteuert. Um hierbei die Entwicklung von elektromagnetisch in diesem Strang erzeugten Geräuschen zu vermindern, werden die Anstiegs- und Abschaltflanken der Impulse des Rechtecksignals mit Hilfe von RC-Gliedern abgeflacht. Eine solche Anordnung bewirkt jedoch - durch die Abflachung der Abschaltflanken - eine Impulsverlängerung, was in vielen Fällen, und besonders bei der Ansteuerung von Vollbrückenschaltungen, unerwünscht ist, da hierdurch die Gefahr vergrößert wird, daß zur gleichen Zeit alle Brückenzweige leitend gesteuert werden.

Aus der EP - A - 40 484 ist ferner ein zweisträngiger, zweipulsiger kollektorloser Gleichstrommotor bekannt, der durch eine rechteckförmige Ausgangsspannung von zwei Hall-IC's gesteuert wird. Hierbei werden die aus der GB - A - 2 071 939 bekannten Impulsformungsmaßnahmen getroffen, um das Einschalten und das Ausschalten der Leistungstransistoren dieses Motors zu verzögern. Dies hat jedoch zur Folge, daß jeweils nach dem Kommutierungszeitpunkt zeitweilig ein Strom in beiden Strängen des Motors fließt. Da hierbei der eine Strang den Motor abbremst, wird durch diese Maßnahme zwar der Geräuschpegel des Motors verringert, aber auf Kosten des Wirkungsgrades, da ein Teil der zugeführten elektrischen Energie nicht dazu verwendet wird, um den Motor anzutreiben, sondern um ihn zu bremsen.

Es ist deshalb Aufgabe der Erfindung einen Motor aufzuzeigen, bei dem der Kommutierungsvorgang in der gewünschten Weise günstig beeinflußbar ist, ohne hierdurch den Wirkungsgrad des Motors zu verschlechtern.

Nach der Erfindung wird diese Aufgabe dadurch gelöst, daß die Treiberstufen jeweils einen elektronischen Halbleiterschalter aufweisen, welcher im leitenden Zustand den Eingang des ihm zugeordneten Schaltglieds im wesentlichen kurzschließt und dieses dadurch sperrt, daß den Treiberstufen ferner jeweils eine Quelle im wesentlichen konstanten Stromes, vorzugsweise in der Größenordnung von wenigen mA, zugeordnet ist, aus welcher bei nichtleitendem elektronischem Halbleiterschalter der betreffenden Treiberstufe ein Einschaltstrom zum zugeordneten Schaltglied fließt, und daß an den Ausgang mindestens einer Treiberstufe eine Kapazität angeschlossen ist, um den Einschaltvorgang des zugeordneten Schaltglieds zu verzögern. Dadurch, daß der Halbleiterschalter einer Treiberstufe den Eingang des ihm zugeordneten Schaltglieds im wesentlichen kurzschließt, wird dieses beim Abschalten praktisch sofort gesperrt. Da andererseits die Quelle im wesentlichen konstanten Stromes zur Aufladung der Kapazität Zeit benötigt, wird der Einschaltvorgang verzögert, so daß zwischen dem Abschaltvorgang und dem Einschaltvorgang eine zeitliche Lücke entsteht. Dabei ergibt sich gleichzeitig ein weicher Einschaltvorgang, der die Geräuschentwicklung des Motors reduziert. Dadurch, daß die Quelle im wesentlichen konstanten Stromes nur einen bestimmten Strom liefern kann, besteht ferner die Möglichkeit, am Ausgang einer Treiberstufe zusätzlich mit einem anderen Signal einzuwirken, z.B. mit einem Regelsignal, einem temperaturabhängigen Signal, etc.

Eine besonders einfache Ausgestaltung der Erfindung ergibt sich durch die Merkmale des Anspruchs 2, da hierbei zwei Treiberstufen nur eine einzige, gemeinsame Kapazität benötigen. Da diese Kapazität zudem sehr klein sein kann, z.B. in der Größenordnung ab 100 pF, ergibt sich eine sehr betriebssichere Schaltung mit wenigen Bauelementen.

Eine zusätzliche Möglichkeit der Beeinflussung des Motors ergibt sich durch die Maßnahmen nach Anspruch 3, wobei auf diese Weise beispielsweise die Drehzahl des Motors von der Temperatur abhängig gemacht werden kann, wie das im Anspruch 4 angegeben ist.

Dabei ist eine Ausbildung gemäß Anspruch 5 von besonderem Vorteil, da hierbei nur kleine Einschaltströme erforderlich sind und folglich die Quellen im wesentlichen konstanten Stromes für kleine Ströme ausgelegt werden können, wobei häufig einfach Widerstände mit relativ hohen Widerstandswerten genügen, wie das bei einem Teil der Ausführungsbeispiele angegeben ist.

Eine besonders bevorzugte Ausführungsform des Motors ist im Anspruch 8 gekennzeichnet, denn gerade bei derartigen rechteckförmigen Ausgangssignalen eines Hall-IC kommen die Vorteile der Erfindung besonders gut zur Geltung.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1 eine schematische Darstellung eines zum direkten Antrieb eines Lüfters dienenden zweipulsigen kollektorlosen Gleichstrommotors mit Reluktanz-Hilfsmoment; dieser Motor ist für sich allein bekannt,

Fig. 2 ein erstes Ausführungsbeispiel eines erfindungsgemäßen Motors, mit einer Vollbrückenschaltung,

Fig. 3 Diagramme zur Erläuterung der Fig. 2,

Fig. 4 ein zweites Ausführungsbeispiel der Erfindung, analog Fig. 2,

Fig. 5 ein drittes Ausführungsbeispiel der Erfindung,

Fig. 6 ein viertes Ausführungsbeispiel der Erfindung, mit einem integrierten Kommutierungsbaustein nach der Erfindung,

Fig. 7 eine Variante zu dem in Fig. 6 dargestellten Kommutierungsbaustein,

Fig. 8 Diagramme zur Erläuterung von Fig. 6,

Fig. 9 ein fünftes Ausführungsbeispiel der Erfindung, hier einen Motor mit einer Vollbrückenschaltung der in Fig. 2 dargestellten Art,

Fig. 10 ein sechstes Ausführungsbeispiel der Erfindung, hier einen sogenannten einsträngigen, einpulsigen Motor, und

Fig. 11 ein siebtes Ausführungsbeispiel der Erfindung.

Gleiche oder gleichwirkende Teile werden in der nachfolgenden Beschreibung mit denselben Bezugszeichen bezeichnet und gewöhnlich nur einmal beschrieben.

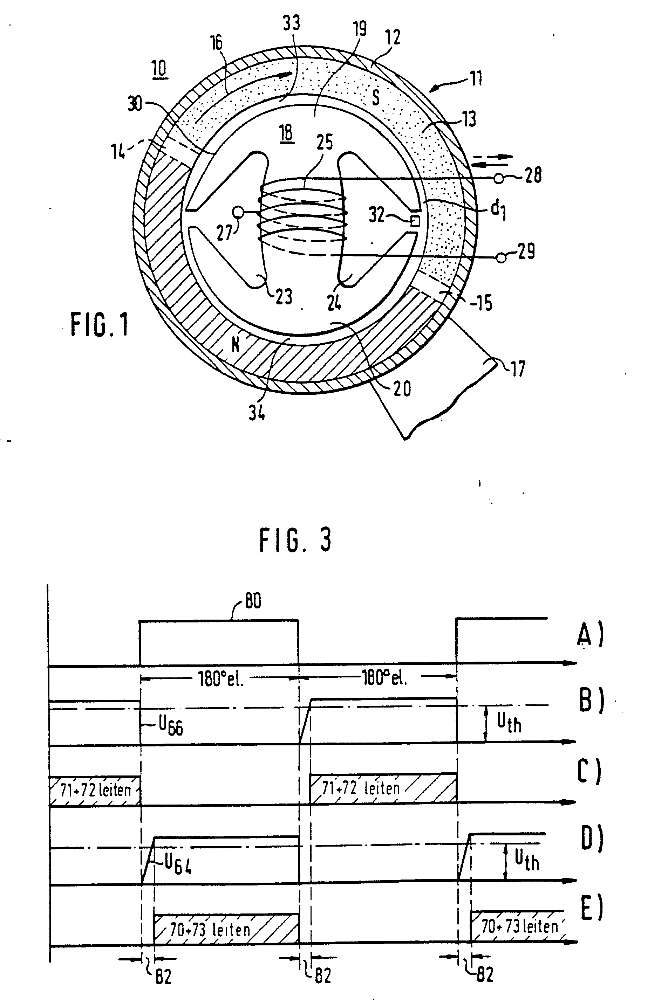

Fig. 1 zeigt eine schematische Darstellung eines zweipulsigen kollektorlosen Gleichstrommotors 10, hier eines einsträngigen, zweipoligen Motors, wie er aus der US - A - 4 030 005 bekannt ist. Hierbei bedeuten:

Zweipulsig: Zahl der der Statorwicklung zugeführten Stromimpulse pro Drehwinkel des Rotors von 360° el. Dem in Fig. 1 dargestellten Motor werden z.B. während einer vollen Umdrehung nur zwei im wesentlichen gleich lange und gleich starke Stromimpulse zugeführt, von denen der eine die Statorwicklung 25 in der einen und der andere in der anderen Richtung durchfließt.

Einsträngig: Der Motor hat nur einen einzigen Wicklungsstrang für den Antrieb. Ein solcher Motor könnte auch als einphasiger Motor bezeichnet werden.

Zweipolig: Der Rotor hat zwei Pole.

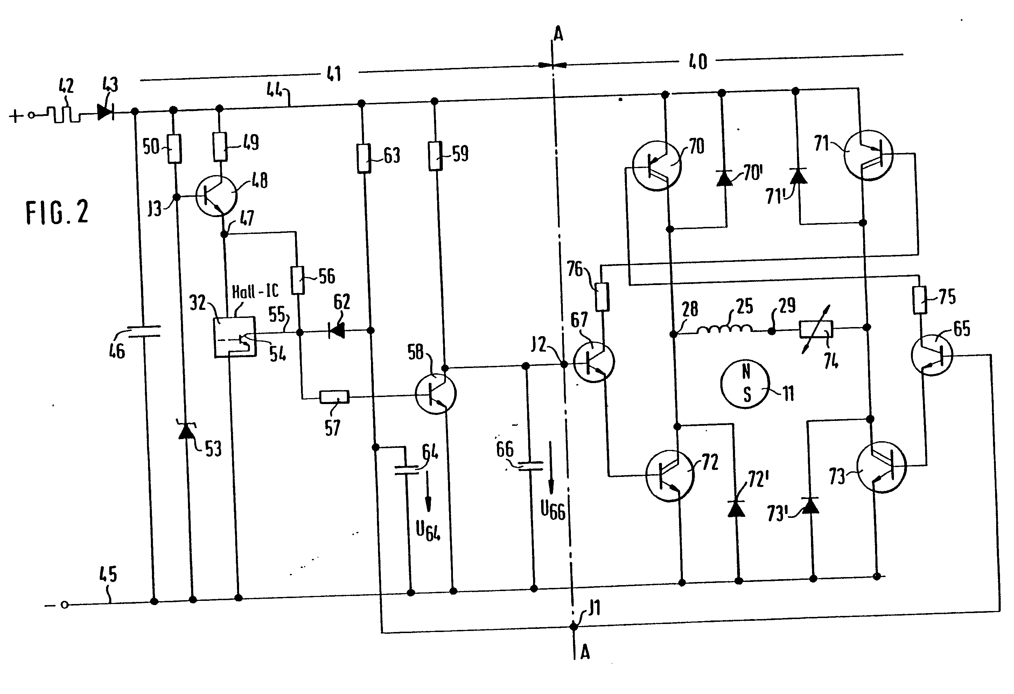

Besonders ist darauf hinzuweisen, daß sich die vorliegende Erfindung in gleicher Weise für Motoren mit höherer Polzahl eignet, z.B. für vierpolige, sechspolige etc. Motoren, und daß sie sich gleichermaßen z.B. auch für vier- oder sechspulsige Motoren eignet, wobei dann z.B. für einen vierpulsigen Motor die Schaltung nach Fig. 2, 4, 5, 6 oder 8 verdoppelt werden muß und die beiden Hall-ICs in entsprechendem Abstand, z.B. von 90° el., am Stator angeordnet werden müssen.

Der in Fig. 1 dargestellte Motor 10 ist ein Außenläufermotor mit einem zweipoligen Außenrotor 11, dessen radiale Magnetisierung in üblicher Weise durch N und S angedeutet ist. Diese Magnetisierung ist trapezförmig mit engen Lücken 14 und 15 (z.B. ca. 5...10° el.) zwischen den Polen. Die trapezförmige Magnetisierung ergibt eine praktisch konstante Induktion (Magnetflußdichte) über jeweils 170...175° el., und daran anschließend einen monotonen Abfall der Magnetisierung, vergl. das DBP 2 346 380, wo das ausführlich erläutert ist.

Der Rotor 11 hat ein Umfangsteil 12, z.B. einen tiefgezogenen Becher aus Stahl, dessen nicht dargestellter Boden mit der nicht dargestellten Welle des Rotors verbunden ist. In diesem Topf 12 ist der eigentliche Magnet 13 befestigt, meist ein sogenannter Gummimagnet. Auf dem Topf 12 sind Lüfterflügel 17 des Lüfters aufgeschweißt, welcher vom Motor 10 angetrieben wird. Es ist nur ein einziger Flügel 17 dargestellt. In Fig. 1 sind die Stellen mit praktisch konstanter Induktion für den Nordpol durch Schraffierung und für den Südpol durch kleine Punkte schematisch angedeutet. Die Drehrichtung ist mit 16 bezeichnet.

Der Stator 18 hat zwei ausgeprägte Pole: Einen oberen Pol 19, und einen unteren Pol 20, welche zwischen sich Nuten 23 und 24 einschließen, in denen die Wicklung 25 angeordnet ist, deren Anschlüsse mit 27, 28 und 29 bezeichnet sind. Ein Rotorstellungssensor 32 ist an der Öffnung der Nut 24 angeordnet. Der Rotorstellungssensor 32 ist hier als Hall-IC ausgebildet, der nur ein Ausgangssignal liefert. Naturgemäß sind auch andere Sensoren möglich, z.B. ein optischer Sensor.

Der Luftspalt 33 über dem Statorpol 19, und der mit ihm in der Form übereinstimmende Luftspalt 34 über dem Pol 20 sind so ausgebildet, wie das die US-PS 4 030 005 zeigt. Z.B. nimmt ausgehend von der Nut 23 der Luftspalt 33 in Drehrichtung bis zu einem Maximum 30 zu, und nimmt von da an monoton bis zu einem Minimum $d_1$ wieder ab. Man erzeugt so das gewünschte Reluktanzmoment, vgl. DE-C- 2 346 380. Naturgemäß kann ein erfindungsgemäßer Motor in gleicher Weise auch als Innenläufermotor aufgebaut werden. Die Luftspaltform hängt von der Form des gewünschten Reluktanzmoments und der Art der Magnetisierung des Rotors 11 ab. Die Pollücken 14 und 15 können mit Vorteil geschrägt sein. - Der Motor nach Fig. 1 ist nur als Beispiel dargestellt, um das Verständnis der nachfolgenden Schaltung zu erleichtern. Selbstverständlich können in gleicher Weise auch andere Motoren verwendet werden, z.B. Innenläufermotoren, Motoren mit flachem Luftspalt, etc.

Wie erläutert fließt in der Wicklung 25 abwechselnd ein Gleichstromimpuls vom Anschluß 28 zum Anschluß 29, und dann ein Gleichstromimpuls vom Anschluß 29 zum Anschluß 28. Zwischen je zwei aufeinanderfolgenden Impulsen muß eine Strompause liegen, um einerseits den Wirkungsgrad des Motors hoch zu halten und andererseits - bei Verwendung einer Brückenschaltung - einen Kurzschluß über die Leistungshalbleiter der Brückenschaltung zu vermeiden.

Fig. 2 zeigt rechts von der Linie A - A eine Vollbrückenschaltung 40 mit vier Leistungs-Halbleiterschaltern und zwei Treiberstufen, und links von der Linie A - A eine Schaltung 41 zum Ansteuern der Brückenschaltung 40. Die Schaltung 41 wird oft auch als Ansteuerschaltung, Kommutierungssteuerung oder Auswahlschaltung bezeichnet. Vom Pluspol einer Gleichspannungsquelle (z.B. 24, 48 oder 60 V) führen ein Schmelzwiderstand 42 und eine gegen Falschpolung sichernde Diode 43 zu einer Plusleitung 44, zwischen der und einer Minusleitung 45 ein Siebkondensator 46 von z.B. 20.. 100 µF angeordnet ist. Der Widerstand 42 schmilzt bei Überlastung des Motors durch und dient somit als Sicherung.

Der als Rotorstellungssensor dienende Hall-IC 32 ist an den Emitter 47 eines Transistors 48 angeschlossen, dessen Kollektor und Basis über je einen Widerstand 49, 50 mit der Plusleitung 44 verbunden sind, und von dessen Basis eine Zenerdiode 53 zur Minusleitung 45 führt, so daß man am Emitter 47 eine Konstantspannung von z.B. 5,6 V erhält, an die auch andere, nicht dargestellte Verbraucher angeschlossen werden könnten, z.B. ein Drehzahl- oder ein Stromregler. Ein Vorteil der vorliegenden Schaltung ist jedoch, daß bis zu relativ hohen Motorleistungen ein Stromregler nicht erforderlich ist.

Der Hall-IC 32, der mit seinem anderen Anschluß an die Minusleitung 45 angeschlossen ist, enthält an seinem Ausgang einen npn-Transistor 54 mit offenem Kollektor, dessen Kollektor wie dargestellt den Ausgang 55 des Hall-IC 32 bildet. Von diesem Ausgang führt ein erster Arbeitswiderstand 56 des Hall-IC 32 zur Konstantspannung am Emitter 47, ferner ein Widerstand 57 zur Basis eines npn-Phasenumkehrtransistors 58, dessen Emitter mit der Minusleitung 45 und dessen Kollektor über einen hochohmigen Widerstand 59 mit der Plusleitung 44 verbunden ist, deren Potential also im Betrieb wie dargelegt wesentlich höher ist als das des Emitters 47.

An den Ausgang 55 ist ferner die Kathode einer Diode 62 angeschlossen, deren Anode über einen hochohmigen Widerstand 63, der als zweiter Arbeitswiderstand des Hall-IC 32 dient, mit der Plusleitung 44, über einen Verzögerungskondensator 64 mit der Minusleitung 45 und über einen Punkt J1 mit der Basis eines als Treiberstufe dienenden npn-Transistors 65 verbunden ist.

Der Kollektor des Phasenumkehrtransistors 58 ist ebenfalls über einen Verzögerungskondensator 66 mit der Minusleitung 45 verbunden sowie über einen Punkt J2 mit der Basis eines als Treiberstufe dienenden npn-Transistors 67.

Die Vollbrückenschaltung 40 enthält vier Darlingtontransistoren, nämlich in den oberen Zweigen zwei pnp-Transistoren 70, 71, und in den unteren Zweigen zwei npn-Transistoren 72, 73. Die Emitter von 70, 71 sind mit der Plusleitung 44, die Emitter von 72, 73 mit der Minusleitung 45 verbunden. Die Kollektoren von 70 und 72 sind miteinander und mit den Anschluß 28 der Statorwicklung 25 verbunden. Die Kollektoren von 71 und 73 sind ebenfalls miteinander und über einen PTC-Widerstand 74 mit dem Anschluß 29 der Statorwicklung 25 verbunden. Die Basis des Transistors 70 ist über einen Widerstand 75 mit dem Kollektor des Treibertransistors 65 verbunden, dessen Emitter direkt mit der Basis des Transistors 73 verbunden ist. Die Basis des Transistors 71 ist über einen Widerstand 76 mit dem Kollektor des Treibertransistors 67 verbunden, dessen Emitter direkt mit der Basis des Transistors 72 verbunden ist.

Wenn also der Treibertransistor 67 leitend ist, sind die Brückentransistoren 71 und 72 leitend, und es fließt ein Strom von der Plusleitung 44 über den Transistor 71, den PTC-Widerstand 74, die Statorwicklung 25 und den Brückentransistor 72 zur Minusleitung 45. Ist umgekehrt der Treibertransistor 65 leitend, so werden die Brückentransistoren 70 und 73 leitend und es fließt ein Strom von der Plusleitung 44 über den Transistor 70, die Statorwicklung 25, den PTC-Widerstand 74 und den Transistor 73 zur Minusleitung 45. Der Strom in der Statorwicklung 25 fließt also einmal von 29 nach 28, das andere Mal von 28 nach 29. Der PTC-Widerstand 74 verhindert, daß bei blockiertem Rotor 11 der Motorstrom zu hoch wird, da er dann durch Erhitzung seinen Widerstandswert stark erhöht und den Strom in der Wicklung 25 auf ungefährliche Werte reduziert.

Wenn beide Treibertransistoren 65 und 67 gleichzeitig eingeschaltet wären, würden alle Brückentransistoren 70 - 73 gleichzeitig leitend und würden eine Kurzschlußverbindung zwischen der Plusleitung 44 und der Minusleitung 45 herstellen, so daß diese Transistoren sofort zerstört würden. Dieser Zustand darf also auf keinen Fall eintreten, d.h. die Steuerimpulse für die Treibertransistoren 65 und 67 müssen durch zeitliche Lücken getrennt sein. Hierzu sind nach der Erfindung besondere Maßnahmen vorgesehen.

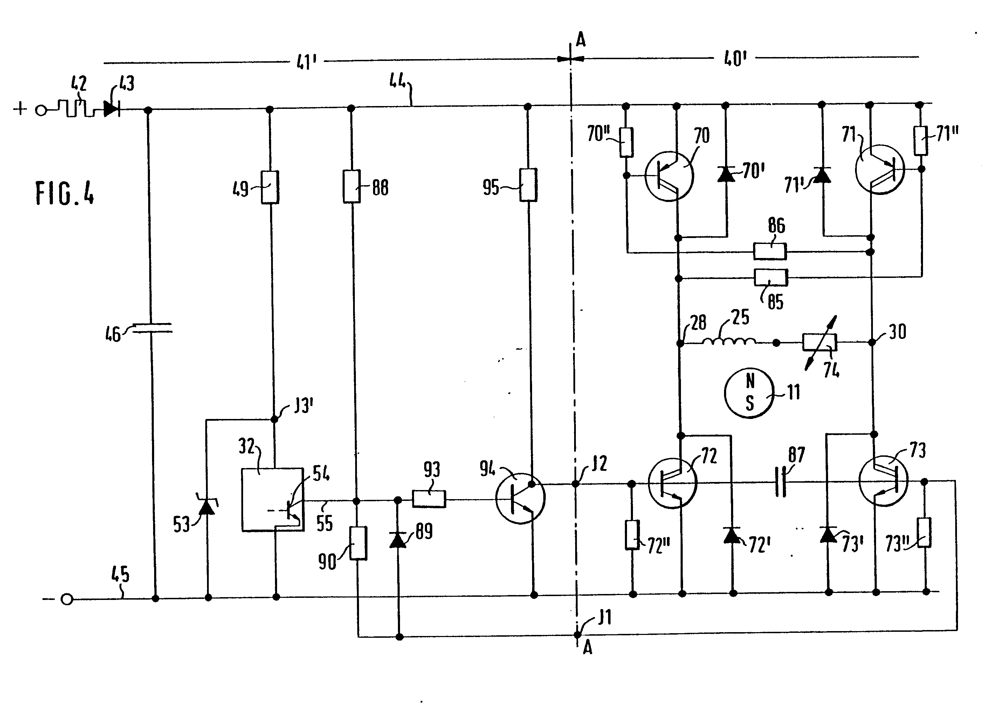

Der Hall-IC 32 liefert an seinem Ausgang rechteckförmige Impulse 80, vergl. Fig. 3 A. Diese sind jeweils während 180° el. hoch (Transistor 54 gesperrt) und dann während 180° el. tief (Transistor 54 leitend).

Wenn der Ausgang 55 hoch wird, wird über den relativ hochohmigen Widerstand 57 der Transistor 58 leitend, entlädt dabei den Verzögerungskondensator 66 innerhalb sehr kurzer Zeit, z.B. innerhalb einer Mikrosekunde, wirkt also als dessen Entladeglied, und sperrt den Treibertransistor 67 und damit die Brückentransistoren 71 und 72. Dies zeigt Fig. 3 B und C. Fig. 3 B zeigt die Spannung $u_{66}$ am Kondensator 66, und Fig. 3 C zeigt schraffiert den Einschaltzustand der Transistoren 71 und 72.

Gleichzeitig wird, wenn der Ausgang 55 hoch wird, die Diode 62 gesperrt, so daß über den hochohmigen Widerstand 63 ein Ladestrom zum Verzögerungskondensator 64 fließen kann und diesen weitgehend linear auflädt, wie das in Fig. 3 D dargestellt ist ($u_{64}$). Erreicht die Spannung am Kondensator 64 einen Schwellwert $u_{th}$ von ca. 2 V (Basis-Emitter-Schwellenspannungen von 3 Transistoren!), so wird der Treibertransistor 65 leitend, und mit ihm die Transistoren 70 und 73.

Nach einer Rotordrehung von 180° el. wird das Potential des Ausgangs des Hall-IC 32 niedrig, d.h. der Transistor 54 wird leitend. Der Verzögerungskondensator 64 kann sich nun über die Diode 62 und den hier als Entladeglied ausgenützten Transistor 54 sehr rasch entladen, z.B. innerhalb einer Mikrosekunde, so daß der bisher leitende Treibertransistor 65 sehr rasch gesperrt wird, ebenso die von ihm angesteuerten Transistoren 70 und 73.

Gleichzeitig wird über den relativ hochohmigen Widerstand 57 der Phasenumkehrtransistor 58 gesperrt, so daß sich gemäß Fig. 3 B der Verzögerungskondensator 66 über den hochohmigen Widerstand 59 mit einem ziemlich konstanten Strom, also weitgehend linear, aufladen kann. Bei Überschreiten einer Schwellenspannung $u_{th}$ (hier z.B. ca. 2 V) wird der Treibertransistor 67 und mit ihm die Transistoren 71 und 72 leitend.

Wie man also aus Fig. 3 erkennt, liegen jeweils zeitliche Lücken 82 zwischen den Abschnitten, an denen einerseits die Brückentransistoren 70 und 73, andererseits die Brückentransistoren 71 und 72 leitend sind. Bei einem vierpoligen Motor, der mit 3000 U/min läuft, würden z.B. 180° el. einer Zeit von 5 ms entsprechen. In diesem Fall wählt man die zeitliche Dauer der Lücken 82 zu etwa 0,1...0,5 ms, also ganz wesentlich größer als die Entladezeit der Kondensatoren 64, 66, die nur wenige Mikrosekunden zu betragen braucht.

Die hochohmigen Widerstände 59 und 63 an der relativ hohen Betriebsspannung von z.B. 24 oder 48 V wirken praktisch als Konstantstromquellen und bewirken eine weitgehend lineare Aufledung der Verzögerungskondensatoren 64 und 66, was eine präzisere Einschaltverzögerung bewirkt als die Aufladung nach einer e-Funktion, die sich beim Anschluß an den Emitter 47 ergeben würde. Außerdem wird auf diese Weise der Transistor 48 entlastet und kann kleiner dimensioniert werden.

Bei der vorliegenden Schaltung wird der interne Transistor 54 des Hall-IC 32 als Entladeglied für den Verzögerungskondensator 64 verwendet. Dies ist eine besonders vorteilhafte und daher bevorzugte Lösung. Naturgemäß könnte man für diesen Zweck aber auch einen separaten Transistor verwenden, was jedoch teurer wäre. Bei der dargestellten Schaltung ist ein Entkopplungsglied in Form des Widerstands 57 und der Diode 62 erforderlich, um zu ermöglichen, daß bei einem Sperren des Transistors 54 einesteils der Transistor 58 sofort leitend wird und den Kondensator 66 sofort entlädt, andererseits sich der Kondensator 64 über den Widerstand 63 langsam aufladen kann. Ohne diese beiden Bauteile würde die Spannung am Kondensator 64 auf die Basis-Emitter-Schwellenspannung des Transistors 58 begrenzt. - Zu den Brückentransistoren 70 - 73 sind jeweils Leerlaufdioden 70' bis 73' antiparallel geschaltet.

Im folgenden werden für einige Bauelemente typische Werte angegeben, wobei k = kOhm:

Betriebsspannung: 48 V =
Motor vierpolig, einsträngig, Leistung 15 W
Spannung am Punkt 47: 5,6 V
Hall-IC 32... TL 170
Widerstand 56... 2,2 k
Widerstände 57, 59, 63...100 k
Widerstände 75, 76...22 k
Kondensatoren 64, 66...10 nF.

Fig. 4 zeigt eine weitere Vereinfachung eines erfindungsgemäßen Motors, bei der - bei weiter verbesserter Funktion - noch weniger Bauelemente benötigt werden, was bei der Verwendung in Lüftern besonders wichtig ist, da dort der verfügbare Raum äußerst begrenzt ist. Gleiche oder gleichwirkende Teile wie in den vorhergehenden Figuren werden mit denselben Bezugszeichen bezeichnet wie dort und gewöhnlich nicht nochmals beschrieben.

Die Vollbrückenschaltung 40' hat prinzipiell denselben Aufbau wie die Vollbrückenschaltung 40 nach Fig. 2, d.h. es sind vier Darlingtontransistoren 74 - 73 mit Freilaufdioden 70' - 73' und Basis-Emitter-Ableitwiderständen 70" - 73" vorgesehen. Vom Brückenanschluß 28 führt die Statorwicklung 25 und der PTC-Widerstand 74 zum Brückenanschluß 30.

Die oberen Brückentransistoren 70 und 71 werden hier in anderer Weise angesteuert als bei der Schaltung nach Fig. 2: Vom Anschluß 28 führt ein Widerstand 85 zur Basis des Transistors 71, und vom Anschluß 30 führt ein Widerstand 86 zur Basis des Transistors 70.

Ferner ist zwischen den Basen der Transistoren 72 und 73 ein Kondensator 87 vorgesehen, der jedoch u.U. entfallen kann, falls die Transistoren 72 und 73 große innere Kapazitäten haben.

Die Ansteuerschaltung 41' verwendet ebenfalls einen Hall-IC 32, kann aber naturgemäß auch jeden anderen Sensortyp verwenden, z.B. eine Lichtschranke. Ein besonderer Vorzug der Erfindung ist, daß Sensoren mit digitalen Ausgangssignalen 80 (Fig. 3) verwendbar sind, also mit Signalen, die nicht analog die Größe des sie steuernden Magnetfelds (oder einer sonstigen physikalischen Größe) wiedergeben.

Parallel zum Hall-IC 32 liegt eine Zenerdiode 53 mit einer Zenerspannung von z.B. 5 Volt. Mit seinem einen Anschluß ist der Hall-IC 32 direkt an die Minusleitung 45 angeschlossen, während sein anderer Anschluß über den Widerstand 49 mit der Plusleitung 44 verbunden ist. Der innere Aufbau des Hall-IC 32 wurde bei Fig. 2 erläutert.

Der Ausgang 55 des Hall-IC 32 ist über einen Widerstand 88 mit der Plusleitung 44 sowie direkt mit der Kathode einer Diode 89 verbunden, deren Anode über den Punkt J1 mit der Basis des Brückentransistors 73 verbunden ist und zu der ein Widerstand 90 parallelgeschaltet ist.

Ferner führt vom Ausgang 55 ein Widerstand 93 zur Basis eines npn-Transistors 94, dessen Emitter direkt mit der Minusleitung 45 und dessen Kollektor über den Punkt J2 direkt mit der Basis des Brückentransistors 72 und über einen Widerstand 95 mit der Plusleitung 44 verbunden ist. Der Transistor 94 dient als Phasenumkehrstufe und als steuerbares Glied zum Sperren des Steuereingangs des Transistors 72, während der interne Transistor 54 des Hall-IC 32 als steuerbares Glied zum Sperren des Steuereingangs des Brückentransistors 73 dient.

Die Anordnung nach Fig. 4 hat folgende Vorteile:

a) Durch den PTC-Widerstand 74 sind Motor und Brückenschaltung 40' gegen Überlastung geschützt.

b) Bei Fortfall des Überlastzustandes, also z.B. wenn der Rotor 11 nicht mehr blockiert ist, stellt der Überlastschutz automatisch den Normalzustand wieder her, so daß der Motor wieder laufen kann.

c) Auch bei Überlastung der Brückenschaltung 40' bleibt die Ansteuerschaltung 41' funktionsfähig.

d) Die Brückenschaltung 40' wird - trotz Verwendung "digitaler" Signale 80 - so angesteuert, daß zwischen dem Abschalten eines ersten Transistorpaares und dem Einschalten des nachfolgenden Transistorpaares eine relativ große zeitliche Pause liegt, z.B. in der Größenordnung von 1/100 bis 1/10 der Schaltperiodendauer.

e) Ferner ist durch den Schmelzwiderstand 42 die Anordnung nach Fig. 4 gegen ein Versagen der Brückenschaltung 40' geschützt.

Der Kondensator 46 dient dazu, die beim Kommutieren des Motorstroms in der Statorwicklung 25 freiwerdende Energie aufzunehmen und dadurch Spannungsspitzen zu vermeiden.

Im Betrieb wird der Brückentransistor 72 über die Phasenumkehrstufe 93, 94, 95 angesteuert, während der Brückentransistor 73 ohne Phasenumkehr direkt vom Hall-IC 32 angesteuert wird. Ist z.B. der Transistor 94 gesperrt, also der Brückentransistor 72 leitend, so entspricht das Potential des Punkts 28 etwa dem der Minusleitung 45. Hierdurch erhält - über den Widerstand 85 - die Basis des Brückentransistors 71 einen Einschaltstrom, so daß dieser Transistor leitend wird. Damit entspricht das Potential seines Kollektors (Punkt 30) etwa dem der Plusleitung 44, und es kann von der Plusleitung 44 ein Strom über den Transistor 71, den PTC-Widerstand 74, die Statorwicklung 25 und den Transistor 72 zur Minusleitung 45 fließen.

Wenn im umgekehrten Fall der Transistor 73 leitend und der Transistor 72 gesperrt ist, fließt über den Widerstand 86 ein Basisstrom zum Transistor 70, so daß dieser leitend wird und der Motorstrom in umgekehrter Richtung fließt, also von der Leitung 44 über den Transistor 70, die Statorwicklung 25, den Widerstand 74 und den Transistor 73 zur Minusleitung 45.

Bei einer Brückenschaltung dieser Art ist es für einen sicheren Betrieb von größter Wichtigkeit, daß die mit ihren Kollektoren miteinander verbundenen Transistoren verschiedenen Leitungstyps niemals gleichzeitig leitend werden, da der dann mögliche Strom nicht begrenzt ist und einem Kurzschluß zwischen der Plusleitung 44 und der Minusleitung 45 entspricht. Die Verlustleistung in den Transistoren kann dann gefährliche Werte annehmen.

Die erste erfindungsgemäße Maßnahme zur Verhinderung dieser Kurzschlußströme besteht darin, daß das Abschalten der Transistoren 72 und 73 relativ rasch über leitend geschaltete Halbleiterstrecken geschieht, die einen relativ geringen differentiellen Innenwiderstand aufweisen. Dadurch ist die Zeitkonstante, die diese Innenwiderstände mit der Basis-Emitter- und der Basis-Kollektor-Kapazität der Transistoren 72 und 73 bilden, vergleichsweise klein. Beim Transistor 73 besteht die leitende Halbleiterstrecke aus der Diode 89 und dem leitend geschalteten inneren Transistor 54 des Hall-IC 32. Beim Transistor 72 stellt der leitende Transistor 94 diese Halbleiterstrecke dar.

Im Gegensatz zum Abschaltvorgang wird der Einschaltvorgang durch Basisströme bewirkt, die durch relativ hochohmige Widerstände erzeugt werden und daher einen relativ langsamen Anstieg der Basisspannung bewirken. Wird z.B. der Transistor 94 abgeschaltet, so fließt ein Basisstrom über den Widerstand 95 in die Basis des Brückentransistors 72. Diese war jedoch kurz vorher etwa auf dem Potential des Emitters, so daß der Basisstrom zunächst die Speicherwirkung der Basis-Emitter- und vor allem der Basis-Kollektor-Kapazität überwinden muß, bevor der Transistor 72 in den leitenden Zustand kommt.

In analoger Weise ist das Einschalten des Transistors 73 verzögert, wenn der innere Transistor 54 des Hall-IC 32 gesperrt wird: Die Basis des Transistors 73 war unmittelbar vorher auf dem Potential des Emitters, und der Basisstrom, der über die Widerstände 88 und 90 zur Basis des Transistors 73 fließt, muß zunächst dessen Speicherwirkung überwinden, ehe der Transistor 73 leitend werden kann.

Da die Kapazitäten moderner Transistoren verhältnismäßig klein sind, ist der beschriebene Verzögerungseffekt des Einschaltens gegenüber dem Abschalten schwach ausgeprägt. Er genügt zwar im allgemeinen, um direkte Kurzschlußströme über die Transistoren 70 und 72 bzw. 71 und 73 zu verhindern. Dieser Effekt kann jedoch leicht durch nicht immer ganz auszuschließende Nebeneffekte, z.B. Kapazitäten zwischen den Leitungen, Leitungswiderstände und Toleranzstreuungen zwischen den einzelnen Transistorexemplaren, gestört werden.

Der beschriebene Effekt kann jedoch in äußerst vorteilhafter Weiterbildung der Erfindung auf sehr einfache Weise dadurch wesentlich verstärkt werden, daß der Kondensator 87 zwischen die Basen der Transistoren 72 und 73 geschaltet wird, dessen Wert 100 pF oder mehr betragen kann.

Die Wirkung des Kondensators 87 ist folgende: Angenommen, der innere Transistor 54 des Hall-IC 32 sei leitend, dann sind die Transistoren 94 und 73 nicht leitend, und der Transistor 72 ist leitend. Wenn nun zu einem bestimmten Zeitpunkt das Hall-IC 32 seinen Schaltzustand ändert, d.h. nicht leitend wird, wird der Transistor 94 fast gleichzeitig leitend und schließt die Basis-Emitter-Strecke des Brückentransistors 72 im wesentlichen kurz. Dadurch sinkt die Basis-Emitter-Spannung $U_{BE}$ am Transistor 72 von vorher ca. 1,2... 1,4 V sehr rasch auf ca. 0,1...0,3 V. Diese rasche Potentialänderung an der Basis des Transistors 72 wird über den Kondensator 87 auf die Basis des Transistors 73 übertragen, so daß dessen Basispotential kurzzeitig sogar unter dasjenige der Minusleitung 45 sinkt und der Transistor 73 mit Sicherheit zunächst gesperrt bleibt, obwohl über die Widerstände 88 und 90 ein einschaltend wirkender Strom zur Basis des Transistors 73 fließt. Dieser Strom muß nun zunächst den Kondensator 87 um eine Spannungsdifferenz von 2 x $U_{BE}$ umladen, bevor der Transistor 73 leitend werden kann. Es sind damit für eine relativ lange Zeit beide Transistoren 72 und 73 und damit auch die Transistoren 70 und 71 sicher gesperrt.

Im umgekehrten Fall, wenn der innere Transistor 54 des Hall-IC 32 von seinem gesperrten in seinen leitenden Zustand übergeht, geschieht die Umladung des Kondensators 87 in völlig analoger Weise in umgekehrter Richtung: Die Basis-Emitter-Spannung $U_{BE}$ des vorher leitenden Transistors 73, die bisher ca. 1,2...1,4 V betrug, wird durch den inneren Transistor 54 des Hall-IC 32 über die Diode 89 innerhalb sehr kurzer Zeit auf ca. 0,8 V vermindert, wodurch der Transistor 73 schnell gesperrt wird. Über den Widerstand 90 wird diese Basis-Emitter-Spannung etwas langsamer noch weiter bis auf ca. 0,1...0,3 V verringert. Diese schnelle Potentialänderung wird durch den Kondensator 87 von der Basis des Transistors 73 auf die Basis des Transistors 72 übertragen, so daß dieser trotz des nun über den Widerstand 95 fließenden Basisstroms zunächst gesperrt bleibt. Der Kondensator 87 muß zunächst um etwa 2 x $U_{BE}$ über den Widerstand 95 umgeladen werden, bevor der Brückentransistor 72 leitend werden kann. Der Kondensator 87 wirkt also in Doppelfunktion für zwei Schaltvorgänge verzögernd, nämlich für den Einschaltvorgang des Brückentransistors 72, und für den Einschaltvorgang des Brückentransistors 73.

Der Widerstand 93 dient der Entkopplung zwischen der (notwendig relativ großen) Ausgangsspannung des Hall-IC 32 an dessen Ausgang 55 und der kleinen Basis-Emitter-Spannung des Transistors 94.

Die Widerstände 88, 90 und 93 werden in besonders vorteilhafter Weise so dimensioniert, daß sie an der Basis des Transistors 73 etwa den gleichen Strom hervorrufen, wie das der Widerstand 95 an der Basis des Transistors 72 tut. Dadurch sind die Verzögerungszeiten beim Einschalten der Transistoren 72 und 73 im wesentlichen gleich.

Insbesondere dadurch, daß die Basen der beiden Brückentransistoren 72 und 73 durch den Kondensator 87 miteinander verbunden sind, erreicht man zwischen dem Abschalten eines Transistorpaares und dem Einschalten des nachfolgenden Transistorpaares die gewünschte relativ große zeitliche Pause in der Größenordnung von 1/100...1/10 der Schaltperiodendauer, wobei die Größe dieser Pause durch die Wahl der Größe des Kondensators 87 und/oder der Widerstände 88, 95 beeinflußbar ist. Durch diese Pause verringert man die thermische Belastung der Transistoren der Brückenschaltung 40' und erhält einen guten Wirkungsgrad und eine hohe Lebensdauer des Motors.

Durch die kreuzweise Verbindung der Basen der Transistoren 70, 71 mit den Kollektoren der Transistoren 72, 73 ergibt sich eine direkte Ansteuerung, wodurch vie Treibertransistoren 65 und 67 nach Fig. 2 entfallen und sich eine erhebliche Vereinfachung der Schaltung ergibt.

Im folgenden werden für Fig. 4 einige typische Werte angegeben, wobei k = kOhm:

Betriebsspannung: 48 V (40...60 V)
Aufgenommene Leistung: 10 W bei 3000 U/min
Hall-IC 32 TL170 Wid. 85, 86 je 47 k
Kond. 46 47µF Kond. 87 3300 pF
Wid. 49 4,7 k Transistoren 70, 71 BD680
Wid. 88 33 k Transistoren 72, 73 BD679
Wid. 90 12 k
Wid. 93 27 k
Diode 89 1N4148
Wid. 95 68 k
Trans. 94 BC546

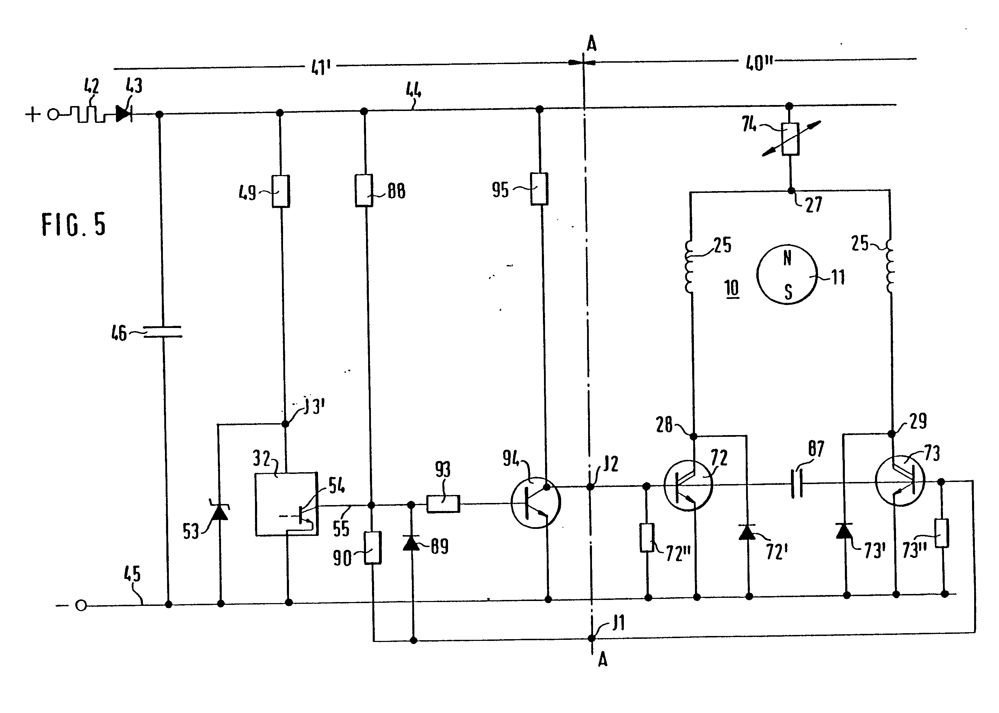

Fig. 5 zeigt eine einfache Abwandlung von Fig. 4. Die Ansteuerschaltung 41' von Fig. 5 stimmt mit derjenigen nach Fig. 4 vollständig überein und wird deshalb nicht nochmals beschrieben. Als Halbleiteranordnung wird hier eine Anordnung 40" mit nur zwei Darlingtontransistoren 72 und 73 verwendet, deren Schaltung und Verbindung mit der Ansteuerschaltung 41' genauso ausgebildet ist wie bei Fig. 4, weshalb sie nicht nochmals beschrieben wird. Ebenso ist zwischen ihren Basen der Kondensator 87 vorgesehen, dessen Größe ebenfalls gleich ist wie bei Fig. 4. Die für Fig. 4 angegebenen typischen Werte gelten in gleicher Weise für Fig. 5.

Der Motor 10 ist hier zweisträngig, d.h. seine Wicklung 25 hat gemäß Fig. 1 eine Mittelanzapfung 27, welche über einen PTC-Widerstand 74 mit der Plusleitung 44 verbunden ist. Das eine Wicklungsende 28 (vergl. Fig. 1) ist mit dem Kollektor des Transistors 72, das andere Wicklungsende 29 mit dem Kollektor des Transistors 73 verbunden. Wenn also der Transistor 72 leitet, fließt Strom in der einen Richtung durch die obere Spulenhälfte der Spule 25 in Fig. 1, und diese stellt also den einen Strang dar, und wenn der Transistor 73 leitet, fließt Strom in der entgegengesetzten Richtung durch die untere Spulenhälfte der Spule 25 in Fig. 1, und diese stellt also den zweiten Strang dar.

Wie man ohne weiteres erkennt, ist es sinnlos, wenn beide Transistoren 72 und 73 gleichzeitig leiten, weil sich dann die Magnetfelder der beiden Spulenhälften gegenseitig aufheben und nur die Wicklung 25 nutzlos erwärmt wird, was den Wirkungsgrad des Motors verschlechtert.

Deshalb ist auch bei einer zweisträngigen Anordnung nach Fig. 5 die Erzeugung einer Schaltlücke wertvoll, bei der kurzzeitig (Pause 82 in Fig. 2) keiner der beiden Transistoren 72 und 73 leitet.

Die Wirkungsweise wurde bereits bei Fig. 4 ausführlich beschrieben. Wenn z.B. der Phasenumkehrtransistor 94 leitend wird, sperrt er den Transistor 72 und senkt dadurch dessen Basis-Emitter-Spannung von vorher 1,2...1,4 V auf 0,1...0,3 V. Diese rasche Potentialänderung wird durch den Kondensator 87 auf die Basis des Transistors 73 übertragen, so daß dessen Basispotential kurzzeitig sogar unter das Potential der Minusleitung 45 sinkt, und der Transistor 73 mit Sicherheit zunächst gesperrt bleibt. Der Strom, der über die Widerstände 88 und 90 zum Transistor 73 fließt, muß zunächst den Kondensator 87 um die Spannungsdifferenz 2 x $U_{BE}$ umladen, bevor der Transistor 73 leitend werden kann. Somit sind während dieses Umladevorgangs beide Transistoren 72 und 73 gleichzeitig gesperrt, und man erhält die gewünschte Strompause im Bereich der Kommutierung.

Wird umgekehrt der Transistor 73 bei der Kommutierung gesperrt, so spielt sich der umgekehrte Vorgang ab, wie das bei Fig. 4 genau beschrieben ist.

Wird der Rotor 11 blockiert, so erhöht sich der Motorstrom stark; der PTC-Widerstand 74 wird durch diesen Strom so weit erhitzt, daß er einen hohen Widerstandswert annimmt und dadurch den Motor 10 vor Überlastung schützt. Wird die Blockierung gelöst, so kann sich der Widerstand 74 wieder abkühlen, und der Motor 10 kann wieder gestartet werden.

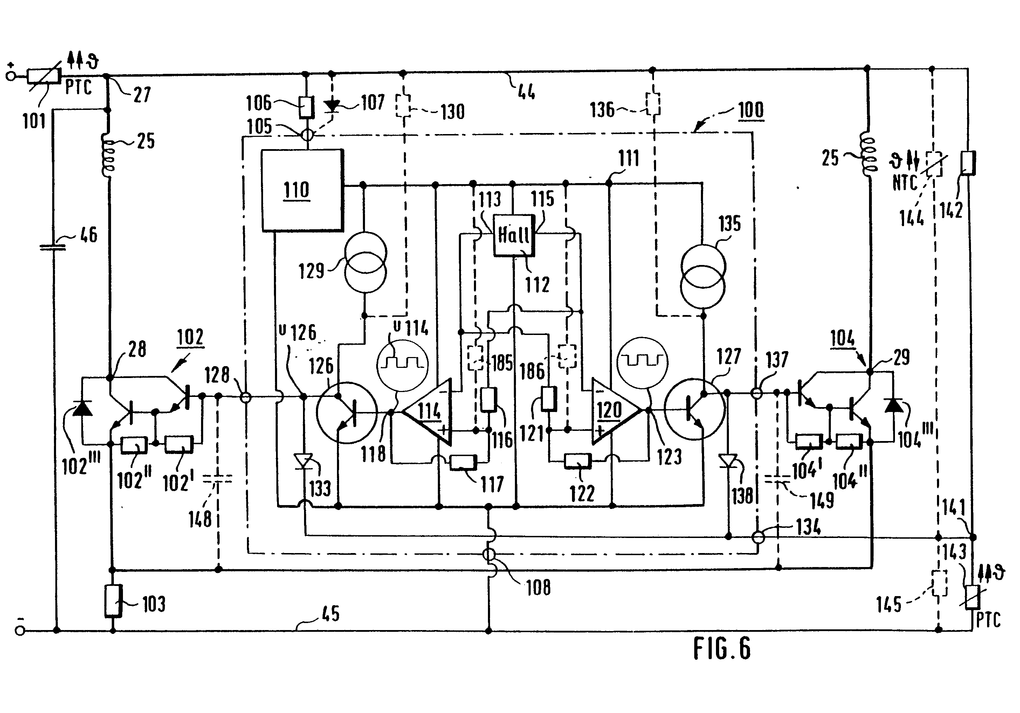

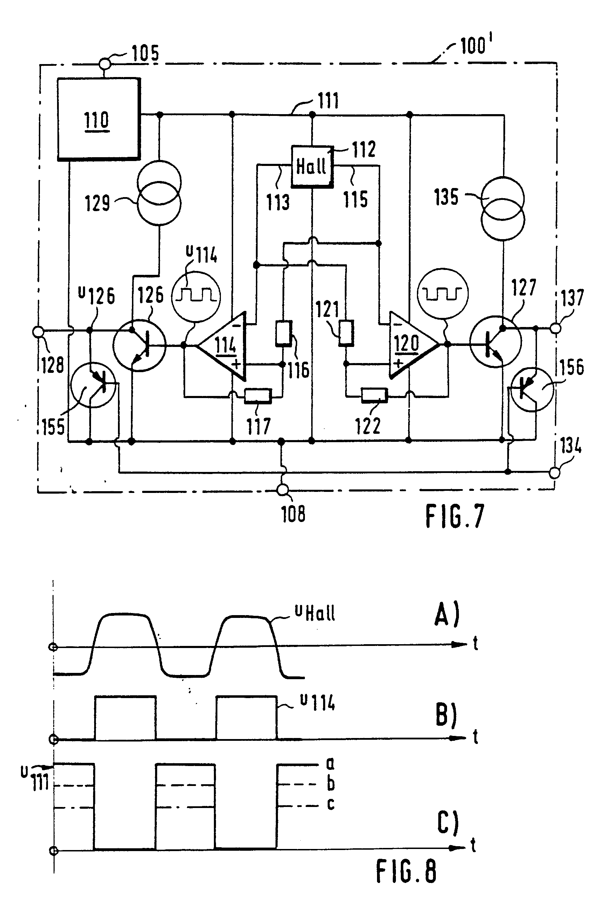

Fig. 6 zeigt ein viertes Ausführungsbeispiel der Erfindung, das ebenso wie Fig. 5 einen zweisträngigen Motor zeigt, der z.B. eine Leistung von 4 W und eine Betriebsspannung von zwischen 8 und 30 V haben kann. (Naturgemäß sind auch höhere Leistungen und höhere Betriebsspannungen möglich). Die Kommutierungsschaltung ist hier als Kommutierungsbaustein 100 ausgebildet, der zweckmässig ein IC ist, was besonders bei Lüftern aus Raumgründen äußerst günstig ist. Dieser Baustein 100 hat insbesondere günstige Schnittstellen zwischen den energiearmen und den energiereichen Sektionen der Schaltung, so daß sich im Baustein selbst eine niedrige Verlustleistung ergibt. Man erhält dadurch u.a. einen hohen Wirkungsgrad des Motors.

Als Blockiersicherung ist hier ein PTC-Widerstand 101 in der positiven Zuleitung vorgesehen. Der eine Strang des Motors 10 ist mit seinem Anschluß 27 mit der Plusleitung 44 und mit seinem Anschluß 28 mit dem Kollektor eines npn-Darlingtontransistors 102 verbunden, dessen Emitter über einen niederohmigen Widerstand 103 (z.B. zwischen 0,1 und 3 Ohm), der eine Strom-Gegenkopplung bewirkt, mit der Minusleitung 45 verbunden ist. Ebenso ist dieser Emitter mit dem Emitter eines zweiten npn-Darlingtontransistors 104 verbunden, dessen Kollektor mit dem Anschluß 29 der Wicklung 25 verbunden ist, deren Anschluß 27 wie dargestellt an der Plusleitung 44 liegt. Die Transistoren 102 und 104 haben wie dargestellt Basis-Emitter-Ableitwiderstände 102', 102", 104', 104" und Freilaufdioden 102''', 104'''. Z.B. kann für diese Transistoren der Typ BD 679 verwendet werden. Wenn einer der Transistoren 102 und 104 leitet, entsteht am Widerstand 103 ein Spannungsabfall, der die Steuerspannung des betreffenden Transistors reduziert und daher gegenkoppelnd wirkt. Dadurch wird verhindert, daß diese Transistoren z.B. bei unterschiedlicher Erwärmung unterschiedliche Ströme führen. Diese Transistoren haben eine hohe Stromverstärkung in der Größenordnung von 1000 bis 1500, was im Rahmen der Erfindung sehr vorteilhaft ist, wie das nachfolgend noch weiter erläutert wird.

Der Baustein 100 ist mit seinem Anschluß 105 über einen Widerstand 106, oder eine Diode 107, oder beides in Serie, an die Plusleitung 44 angeschlossen, und er ist mit seinem Anschluß 108 an die Minusleitung 45 angeschlossen. Der Anschluß 105 führt zu einem in den Baustein 100 integrierten Spannungsregler 110 mit einer Ausgangsspannung von z.B. 3...5 V, der auch mit dem Anschluß 108 verbunden ist. Sein geregelter Ausgang ist mit 111 bezeichnet.

Der Baustein 100 enthält eine Hallzelle 112, deren einer Stromeingang an den Ausgang 111 und deren anderer Stromeingang an den Anschluß 108 geführt ist. Ihr linker Ausgang ist direkt mit dem negativen Eingang eines Komparators 114 verbunden, und ihr rechter Ausgang 115 ist über einen Widerstand 116 mit dem positiven Eingang des Komparators verbunden, der über einen Mitkopplungswiderstand 117 mit dem Ausgang 118 des Komparators 114 verbunden ist.

In völlig symmetrischer Weise ist der Ausgang 115 direkt mit dem negativen Eingang eines Komparators 120 und der Ausgang 113 über einen Widerstand 121 mit dem positiven Eingang des Komparators 120 verbunden, der seinerseits über einen Mitkoppelwiderstand 122 mit dem Ausgang 123 dieses Komparators verbunden ist. Die Komparatoren 114 und 120 sind, wie dargestellt, an den geregelten Ausgang 111 und den Anschluß 108 angeschlossen.

Als Ausgänge des Bausteins 100, also als Treiberstufen, dienen zwei npn-Transistoren 126 und 127. Die Basis des Treibertransistors 126 ist mit dem Ausgang 118 verbunden, sein Emitter mit dem Anschluß 108. Sein Kollektor ist an den Anschluß 128 angeschlossen, und er ist entweder wie dargestellt über ein integriertes Konstantstromglied 129 mit dem geregelten Ausgang 111 verbunden, oder über einen hochohmigen Widerstand 130 mit der Plusleitung 44. Über das Konstantstromglied 129 oder den Widerstand 130 fließt in Betrieb ein niedriger Strom, z.B. von wenigen Milliampere (1..5 mA) zum Kollektor des Transistors 126, an den auch die Anode einer als Stromableitglied dienenden Diode 133 angeschlossen ist, deren Kathode zu einem Anschluß 134 des Bausteins 100 führt, über den eine energiearme Steuergröße, z.B. eine lüfterspezifische Steuergröße, in den Baustein 100 eingespeist werden kann, um die Motordrehzahl zu erhöhen oder abzusenken.

In völlig symmetrischer Weise ist die Basis des Treibertransistors 127 mit dem Ausgang 123 verbunden, und sein Emitter ist mit dem Anschluß 108 verbunden. Sein Kollektor ist über ein Konstantstromglied 135 mit dem geregelten Ausgang 111, oder über einen hochohmigen Widerstand 136 mit der Plusleitung 44, verbunden. Auch hier fließt zum Kollektor des Transistors 127 ein Konstantstrom von wenigen mA. Je kleiner dieser Konstantstrom ist, umso kleiner ist die Verlustleistung im Baustein 100, umso höher ist der Wirkungsgrad des Motors, und umso leichter ist es, mit einem Kleinsignal am Anschluß 134 die Leistung des Motors 10 in weiten Grenzen zu steuern. - Der Kollektor des Treibertransistors 127 ist mit einem Anschluß 137 des Bausteins 100 und mit der Anode einer Diode 138 verbunden, deren Kathode an den Anschluß 134 angeschlossen ist, welch letzterer mit einem Knotenpunkt 141 verbunden ist, von dem ein Festwiderstand 142 zur Plusleitung 44 und ein PTC-Widerstand 143 zur Minusleitung 45 führt. Der Widerstand 143 kann z.B. im Luftstrom des Lüfters angeordnet sein, der vom Motor 10 angetrieben wird. Wird diese Luft wärmer, so steigt das Potential des Knotenpunkts 141 an, dem Motor 10 wird mehr Leistung zugeführt, seine Drehzahl steigt an, und es wird mehr Luft gefördert, so daß die Temperatur wieder abnimmt.

Alternativ kann vom Knotenpunkt 141 auch ein NTC-Widerstand 144 zur Plusleitung 44 und ein Festwiderstand 145 zur Minusleitung 45 führen. Die Wirkung ist dann im Prinzip dieselbe. Die Variante mit dem PTC-Widerstand 143 wird bevorzugt, da bei einer Unterbrechung im Widerstand 143 automatisch die volle Motorleistung eingeschaltet wird.

An den Ausgang 128 ist die Basis des Transistors 102 angeschlossen, an den Ausgang 137 die Basis des Transistors 104. Man hat also hier nur noch wenige Bauteile, nämlich die beiden Leistungstransistoren 102 und 104, den Kondensator 46 von z.B. 22 µF, den Baustein 100, den Widerstand 106, und gegebenenfalls die Widerstände 142 und 143. (Der Anschluß 134 kann z.B. auch an ein festes Potential gelegt werden.)

**Wirkungsweise der Schaltung nach Fig. 6**

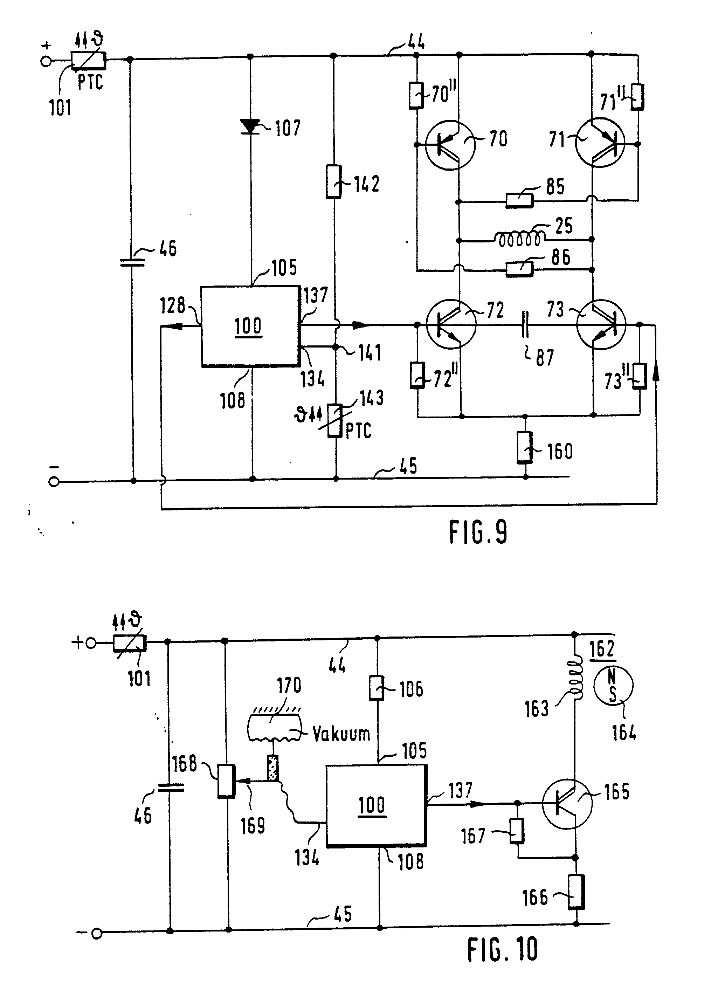

Der Baustein 100 mit der Hallzelle 112 wird z.B. beim Motor nach Fig. 1 anstelle des Hall-IC 32 angeordnet, so daß er vom Rotormagneten 13 gesteuert wird. Dreht sich der Rotor 11 so wird zwischen den Ausgängen 113 und 115 der Hallzelle 112 eine Spannung gemäß Fig. 8A erzeugt, die ein Abbild der Magnetisierung des Rotormagneten 13 ist. Diese Spannung wird z.B. dem Komparator 114 zugeführt und an dessen Ausgang in die Rechteckspannung $u_{114}$ umgeformt, die in Fig. 8B dargestellt ist. Diese steuert den Treibertransistor 126, an dessen Kollektor man die Spannung $u_{126}$ erhält, die in Fig. 8C dargestellt ist. Diese Spannung wird von der Diode 133 geklammert, d.h. wenn die Spannung am Knotenpunkt 141 hoch ist, bleibt die Diode 133 gesperrt, und man erhält die mit durchgehenden Linien gezeichnete Kurvenform a, die einer hohen Temperatur des PTC-Widerstands 143 und damit der maximalen Motorleistung entspricht. Die Spannung a entspricht etwa dem Potential $u_{111}$ am Ausgang 111. Hat der Widerstand 143, der z.B. im Luftstrom eines Lüfters angeordnet sein kann, eine niedrigere Temperatur, so ist das Potential des Knotenpunkts 141 niedriger, und man erhält die in Fig. 8C gestrichelt gezeichnete Kurvenform b, d.h. eine niedrigere Motorleistung.

Hat der Widerstand 143 eine sehr niedrige Temperatur, so erhält man die strichpunktierte Kurvenform c gemäß Fig. 8C, d.h. der Motor 10 erhält noch weniger Strom und läuft noch langsamer. Man kann auf diese Weise mit sehr geringen Strömen von wenigen mA die Motordrehzahl regeln oder steuern, indem man den Spannungshub der Treiberstufen 126, 127 durch ein gemeinsames Signal am Anschluß 134 auf den gewünschten Wert begrenzt.

Zur Einschaltverzögerung kann man zwischen Emitter und Basis des Transistors 102 zusätzlich einen Kondensator 148 und zwischen Emitter und Basis des Transistors 104 zusätzlich einen Kondensator 149 einschalten. Diese können typisch Werte zwischen 1 und 10 nF haben. Die Wirkungsweise dieser Kondensatoren ist dieselbe wie diejenige der Kondensatoren 64 und 66 der Fig. 2. Z.B. wird der Kondensator 148 sehr schnell entladen, wenn der Transistor 126 leitend wird, so daß der Transistor 102 sehr schnell sperrt. Wenn umgekehrt der Transistor 126 sperrt, muß der Kondensator 148 (oder auch nur die innere Kapazität des Darlingtontransistors 102) zuerst über das Konstantstromglied 129 aufgeladen werden, was eine zeitliche Verzögerung des Einschaltens bewirkt. Derselbe Vorgang spielt sich - wegen der Symmetrie der Schaltung - beim Transistor 104 ab, wenn dieser leitend wird. - In den meisten Fällen sind die Kondensatoren 148 und 149 entbehrlich, weil die inneren Kapazitäten der Transistoren 102 und 104 bereits ausreichen, und weil bei einem zweisträngigen Motor durchaus eine kurze Stromlücke genügt.

Naturgemäß kann das Potential am Anschluß 134 in vielfacher Weise beeinflußt werden, z.B. durch einen zu regelnden Druck, eine zu regelnde Luftfeuchtigkeit, Drehzahl, etc. etc. Verwendet man für die Leistungstransistoren 102 und 104 solche mit hoher Stromverstärkung, so genügt für ihre Steuerung ein kleiner Basisstrom in der Größenordnung von wenigen mA. Dann kann der Spannungsteiler 142, 143 (oder 144, 145) entsprechend hochohmig ausgebildet werden, und man erhält einen Motor mit einem entsprechend hohen Wirkungsgrad. Deshalb eignet sich der Baustein 100 besonders gut zur Verwendung in Verbindung mit Darlingtontransistoren hoher Stromverstärkung, oder mit äquivalenten Transistoranordnungen. Es ist aber auch eine Ansteuerung von Thyristoren mit einem solchen Baustein möglich.

Fig. 7 zeigt einen Baustein 100', der für höhere Ausgangsströme geeignet ist. Dieser Baustein stimmt bis auf wenige Unterschiede mit dem Baustein 100 nach Fig. 6 überein. Gleiche oder gleichwirkende Teile werden deshalb in beiden Figuren mit denselben Bezugszeichen bezeichnet, und sie werden bei Fig. 7 nicht nochmals beschrieben.

Statt der Dioden 133, 138 der Fig. 6 sind in Fig. 7 pnp-Transistoren 155, 156 (oder deren als IC ausführbare Äquivalente) vorgesehen. Der Emitter des Transistors 155 ist mit der Anschluß 128, sein Kollektor mit dem Anschluß 108, und seine Basis mit dem Anschluß 134 verbunden. Ebenso ist der Emitter des Transistors 156 mit dem Anschluß 137, sein Kollektor mit dem Anschluß 108, und seine Basis mit dem Anschluß 134 verbunden. Wenn also die Konstantstromquellen 129 und 135 für höhere Ströme ausgelegt sind, kann man mit einem Kleinsignal am Anschluß 134 den Strom steuern, der über diese Transistoren 155 und 156 von den Ausgängen 128 bzw. 137 abgeleitet wird, und man kann dadurch die Motorleistung auch hier mit einem sehr kleinen Steuersignal beeinflussen.

Fig. 9 zeigt einen Motor mit einer Brückenschaltung, die gleich ausgebildet ist wie die Brückenschaltung 40' nach Fig. 4, weshalb dieselben Bezugszeichen verwendet sind wie dort. Die Leerlaufdioden 70' bis 73' sind in Fig. 9 nicht dargestellt.

Bei Fig. 9 sind die Emitter der Brückentransistoren 72 und 73 zusammengefaßt und über einen niederohmigen Widerstand 160 von z.B. 0,1...3 Ohm mit der Minusleitung 45 verbunden. Die Basis des Transistors 72 ist mit dem Anschluß 137 des Bausteins 100 verbunden, die Basis des Transistors 73 mit dem Anschluß 128. Der Kondensator 87 von typisch 0,1...2 nF, der in manchen Fällen auch ganz entfallen kann, liegt hier also direkt zwischen den Anschlüssen 128 und 137, während bei Fig. 6 zwischen diesen beiden Anschlüssen die Serienschaltung der beiden Kondensatoren 148 und 149 liegt. Aus diesem Grunde kann der Kondensator 87 kleiner sein als die Kondensatoren 148 bzw. 149. Der Anschluß 105 des Bausteins 100 ist über die Diode 107 mit der Plusleitung 44 verbunden, und sein Anschluß 108 ist mit der Minusleitung 45 verbunden. Wie bei Fig. 6 ist der Knotenpunkt 141 der Serienschaltung des Widerstands 142 und des PTC-Widerstands 143 mit dem Anschluß 135 verbunden.

Die Wirkungsweise von Fig. 9 ist dieselbe wie bei Fig. 4: Wird z.B. der bisher leitende Transistor 73 gesperrt, so wird durch den Treibertransistor 126 (Fig. 6) das Potential seiner Basis sehr schnell abgesenkt. Diese Potentialänderung wird durch den Kondensator 87 auf die Basis des Transistors 72 übertragen und hält diesen zunächst gesperrt. Es fließt dann über die Konstantstromquelle 135 (oder alternativ über den Widerstand 136) ein im wesentlichen konstanter Strom zum Kondensator 37 und lädt diesen um, wobei dann der Transistor 72 - und mit ihm der Transistor 71 - nach einiger Zeit leitend wird. Bei der Kommutierung in umgekehrter Richtung spielt sich dieser Vorgang in umgekehrter Richtung ab, wie sich das aus der Symmetrie der Anordnung ohne weiteres ergibt.

Fig. 10 zeigt die Verwendung eines Bausteins 100 zum Betrieb eines einsträngigen, einpulsigen Motors 162 mit einem einzigen Strang 163 und einem Rotor 164. Solche Motoren zeigt z.B. die DE - A - 22 60 069. Hier wird nur die eine Hälfte des Bausteins 100 verwendet, und sein nicht verwendeter Ausgang 128 wird deshalb über einen nicht dargestellten Widerstand mit der Minusleitung 45 verbunden. Sein Ausgang 137 ist verbunden mit der Basis eines npn-Darlingtontransistors 165, dessen Kollektor über den Strang 163 mit der Plusleitung 44 und dessen Emitter über einen niederohmigen Widerstand 166 mit der Minusleitung 45 und über einen Ableitwiderstand 167 mit der Basis verbunden ist. Der Baustein 100 ist im Magnetfeld des Rotors 164 angeordnet und wird von diesem gesteuert. Zwischen Plusleitung 44 und Minusleitung 45 liegt ein hochohmiges Potentiometer 168, dessen Abgriff 169 Elektrisch mit dem Anschluß 134 des Bausteins 100 verbunden ist und mechanisch von einer Barometerdose 170 betätigt wird, die in üblicher Weise evakuiert ist. Steigt der Umgebungsdruck, so wird der Abgriff 169 nach oben geschoben, und die Drehzahl des Motors 162 nimmt zu, so daß z.B. mehr Luft gefördert wird, wenn dieser Motor einen Lüfter antreibt. In gleicher Weise kann z.B. ein Differenzialdruck erfaßt werden, oder es kann beim Anstieg der Luftfeuchtigkeit mittels eines Hygrometers die Lüfterdrehzahl erhöht werden. Hier ergeben sich vielfältige Anwendungsmöglichkeiten.

Die Wirkungsweise des PTC-Widerstands 101 in der Zuleitung ist dieselbe, wie sie bei Fig. 5 ausführlich beschrieben wurde, d.h. wenn der Rotor blockiert wird, nimmt der Widerstand 101 einen hohen Wert an und reduziert dadurch den Motorstrom auf einen kleinen Wert. Die Falschpolsicherung wird durch die Diode 107 bewirkt, d.h. bei Falschpolung des Motors bekommt der Baustein 100 keinen Strom und kann nicht zerstört werden.

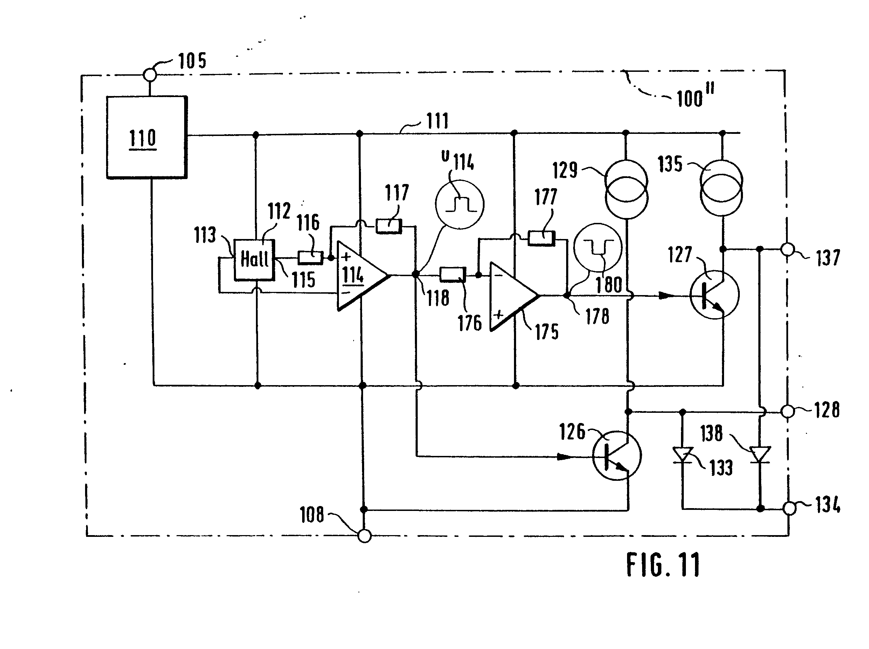

Fig. 11 zeigt einen abgewandelten, unsymmetrischen Aufbau des integrierten Kommutierungsbausteins, der hier mit 100" bezeichnet ist. Die Funktion ist dieselbe wie bei den Bausteinen 100 (Fig. 6) und 100' (Fig. 7). Auch der Aufbau ist weitgehend übereinstimmend. Der Spannungsregler 110 mit seinem Ausgang 111 von z.B. 3...5 V, die Hallzelle 112 mit ihren Ausgangen 113, 115, der Komparator 114, und die eine Treiberstufe (Konstantstromquelle 129 mit einem Strom von z.B. 1...5 mA und npn-Treibertransistor 126) sind identisch ausgebildet wie der linke Teil der Schaltung des Bausteins 100 gemäß Fig. 6. Auch die Diode 133 des Stromableitglieds ist identisch an den Ausgang 128 angeschlossen. Der Widerstand 116 ist hier - wie auch bei den vorhergehenden Ausführungsbeispielen - bevorzugt sehr viel kleiner als der Mitkopplungswiderstand 117, z.B. im Verhältnis 100: 1...10: 1. (Dies gilt analog auch für die Widerstände 121) und 122 in Fig. 6 und 7).

Auch die andere Treiberstufe (Konstantstromglied 135 für z.B. 1...5 mA und npn-Treibertransistor 127) stimmt mit Fig. 6 überein, ebenso die Stromableitdiode 138. Auch die äußeren Anschlüsse des Bausteins 100" sind gleich bezeichnet wie diejenigen des Bausteins 100 der Fig. 6, oder des Bausteins 100' der Fig. 7, da das Verhalten der Bausteine (elektrische Charakteristiken, Signale, Betriebsspannungen etc.) im wesentlichen dasselbe ist.

Bei dem Ausführungsbeispiel nach Fig. 11 entfällt aber im Vergleich zu Fig. 6 der zweite Komparator 120, und an seine Stelle tritt eine Phasenumkehrstufe 175, hier dargestellt als ein Operationsverstärker, der zur Spannungsversorgung an die geregelte Spannung 111 und den Anschluß 108 angeschlossen ist. Sein negativer Eingang ist über einen Widerstand 176 an den Knotenpunkt 118, also den Ausgang des Komparators 114, angeschlossen, und er ist über einen Widerstand 177 mit seinem Ausgang 178 verbunden.

Bevorzugt sind die Widerstände 176 und 177 etwa gleich groß, um einen Verstärkungsfaktor von etwa 1 zu erhalten. Der Ausgang 178 ist mit der Basis des Treibertransistors 127 verbunden und steuert diesen. Die Umkehrstufe 175 bewirkt also eine Phasenumkehr des im wesentlichen rechteckförmigen Signals $u_{114}$ (Knotenpunkt 118), wie das bei 180 in Fig. 11 angedeutet ist. Dadurch erhält man in Fig. 11 an den Ausgängen 128 und 137 gegenphasige Signale, genauso wie an den Ausgängen 128 und 137 des Bausteins 100 der Fig. 6. - Obwohl also die Schaltung des Bausteins 100" der Fig. 11 einen unsymmetrischen Aufbau hat, ist ihre Wirkung dieselbe wie diejenige der Schaltung 100 nach Fig. 6 oder 100' nach Fig. 7. Welche Version verwendet wird, hängt von verschiedenen Kriterien ab, u.a. davon, welche Schaltung sich besser integrieren läßt.

Ein wesentlicher Vorteil der Schaltungen nach Fig. 6 und 7 ist jedoch, daß dort der Hallzelle 112 zwei verschiedene Signale entnommen werden, die dort in unterschiedlichen Signalkanälen verarbeitet werden, während bei Fig 11 der Hallzelle 112 nur ein einziges Signal entnommen wird, das einmal direkt, und einmal nach Phasenumkehr verwendet wird.

Werden zwei verschiedene Signale verwendet und zwei verschiedenen Komparatoren 114 und 120 zugeführt, wie das Fig. 6 oder 7 zeigen, so können diese Komparatoren so eingestellt werden, daß die Ausgangssignale entweder einen kleinen zeitlichen Abstand voneinander haben, daß sie direkt aneinander anschließen, oder daß sie sich überlappen. Die erstere Möglichkeit (zeitlicher Abstand) ist natürlich für viele Motorbauarten die bevorzugte Lösung, weil sie dort den Wirkungsgrad verbessert. Dies gilt ganz besonders für zweipulsige Motoren.

Fig. 6 zeigt diese Variante an einem Beispiel. Hierzu wird der positive Eingang des Komparators 114 über einen hochohmigen Widerstand 185 mit dem geregelten positiven Ausgang 111 des Spannungsreglers 110 verbunden, und der positive Eingang des Komparators 120 wird ebenso über einen hochohmigen Widerstand 186 mit dem Ausgang 111 verbunden. Z.B. ist in Fig. 6 ser Widerstand 117 etwa 10...100 x größer als der Widerstand 116, und der Widerstand 185 ist etwa 200 x größer als der Widerstand 116. Analoges gilt wegen der Symmetrie für die andere Seite der Schaltung. Auf diese Weise schaltet der Komparator 114 erst dann um, wenn der Hallausgang 115 etwas negativer wird, als das ohne den Widerstand 185 erforderlich wäre. Und umgekehrt schaltet der Komparator 120 erst dann um, wenn der Hallausgang 113 etwas negativer wird, als das ohne den Widerstand 186 erforderlich wäre. Hierdurch erhält man auf sehr einfache Weise den gewünschten zeitlichen Abstand der Signale an den Ausgängen 128 und 137. - Naturgemäß kann man auch das Vergleichspotential an dem jeweils anderen Komparatoreingang in entsprechender Weise beeinflussen, um dieselbe Wirkung zu erreichen.

Die Erfindung bringt also bei einfachstem Aufbau ein Optimum an Funktion und Betriebssicherheit, und sie eignet sich wegen der geringen Zahl der Bauelemente besonders gut für den Einbau in sogenannten Gerätelüftern, deren häufigste Baugröße nur eine Länge von 38 mm hat und daher einen sehr kleinen Einbauraum für die Bauelemente aufweist. Die Erfindung kann auch bei sogenannten Halbbrückenschaltungen Anwendung finden.

.

**Patentansprüche**

1. Kollektorloser Gleichstrommotor,
mit einer Statorwicklung, welche mindestens einen Strang (25) aufweist,
mit einem permanentmagnetischen Rotor (11),
mit einer Rotorstellungssensoranordnung (32; 100; 100';100"),
und mit einer zum Steuern der Bestromung der Statorwicklung dienenden Halbleiteranordnung (40; 40'; 102, 104; 165), welche mindestens zwei Schaltglieder (72, 73; 102, 104) aufweist, die abhängig von der Stellung des Rotors (11) kommutiert werden, um den mindestens einen Strang (25) in Abhängigkeit von der Rotorstellung zu bestromen, wobei jeweils zwischen zwei aufeinanderfolgenden Stromimpulsen eine Stromlücke (32) erzeugt wird,
und mit den Schaltgliedern (72, 73; 102, 104) zugeordneten Treiberstufen (54, 58; 54, 94; 126, 127),
dadurch gekennzeichnet, daß die Treiberstufen jeweils einen elektronischen Halbleiterschalter aufweisen, welcher im leitenden Zustand den Eingang des ihm zugeordneten Schaltglieds (72, 73; 102, 104) im wesentlichen kurzschließt und dieses dadurch sperrt, daß den Treiberstufen ferner jeweils eine Quelle (59, 63; 88, 90, 95; 129, 135) im wesentlichen konstanten Stromes, vorzugsweise in der Größenordnung von wenigen mA, zugeordnet ist, aus welcher bei nichtleitendem elektronischem Halbleiterschalter der betreffenden Treiberstufe ein Einschaltstrom zum zugeordneten Schaltglied (72, 73; 102, 104) fließt,
und daß an den Ausgang (J1, J2; 128, 137) mindestens einer Treiberstufe (54, 58; 54, 94; 126, 127) eine Kapazität (64, 66; 87; 148, 149) angeschlossen ist, um den Einschaltvorgang des zugeordneten Schaltglieds (72, 73; 102, 104) zu verzögern.

2. Motor nach Anspruch 1, dadurch gekennzeichnet, daß für zwei Treiberstufen (54, 94) eine gemeinsame Kapazität (87) vorgesehen ist, die zwischen die Ausgänge (J1, J2) dieser beiden Treiberstufen (54, 94) geschaltet ist, um den Einschaltvorgang des gerade einzuschaltenden, einer dieser Treiberstufen (54, 94) zugeordneten Schaltglieds (72, 73) zu verzögern (Fig. 4 und 5).

3. Motor nach Anspruch 1 oder 2, dadurch gekennzeichnet, daß der Spannungshub am Ausgang mindestens einer Treiberstufe (126, 127) durch ein zusätzliches Signal (am Eingang 134) begrenzbar ist.

4. Motor nach Anspruch 3, dadurch gekennzeichnet, daß zur Erzeugung des zusätzlichen Signals ein temperaturabhängiger Sensor (143; 144') vorgesehen ist, um die Drehzahl des Motors abhängig von der Temperatur zu steuern (Fig. 6, 9).

5. Motor nach einem oder mehreren der vorhergehenden Ansprüche, dadurch gekennzeichnet, daß die zur Bestromung des mindestens einen Stranges (25) dienenden Schaltglieder als Transistoranordnungen (102, 104) mit hoher Stromverstärkung ausgebildet sind.

6. Motor nach Anspruch 5, dadurch gekennzeichnet, daß die Transistoranordnungen einen gemeinsamen, vorzugsweise niederohmigen Emitterwiderstand (103; 160) aufweisen, der sie mit einer Leitung (45) der Stromversorgung verbindet.

7. Motor nach einem oder mehreren der vorhergehenden Ansprüche, bei welchem die Rotorstellungssensoranordnung als Hallsensor (112) ausgebildet ist,
dadurch gekennzeichnet, daß der Hallsensor (112) und die Treiberstufen (126, 127) in einem integrierten Schaltkreis zusammengefaßt sind.

8. Motor nach einem oder mehreren der vorhergehenden Ansprüche, dadurch gekennzeichnet, daß die Rotorstellungssensoranordnung als Hall-IC (112) ausgebildet ist, welcher durch das Magnetfeld des Rotormagneten (13) steuerbar ist und welcher bei Vorbeibewegung eines Rotormagnetpols ein rechteckförmiges Signal (80) an seinem Ausgang (55) erzeugt.

9. Motor nach einem oder mehreren der vorhergehenden Ansprüche, dadurch gekennzeichnet, daß an die Ausgänge (J1, J2) der Treiberstufen zwei Transistoren (72, 73) einer Vollbrückenschaltung (40') angeschlossen sind, und daß die beiden anderen Transistoren (70, 71) dieser Vollbrückenschaltung (40') von den Ausgängen der erstgenannten Transistoren (72, 73) aus steuerbar sind.

10. Verwendung eines Motors nach einem oder mehreren der vorhergehenden Ansprüche zum Antrieb eines Lüfters (17), insbesondere eines Gerätelüfters axial kurzer Bauweise.

**Claims**

1. Brushless direct current motor,
with a stator winding which has at least one phase (25),
with a permanent magnet rotor (11),
with a rotor-position sensing arrangement (32; 100; 100'; 100"),
and with a semiconductor arrangement (40; 40'; 102, 104; 165) serving for the control of the current in the stator winding, said semiconductor arrangement having at least two switching members (72, 73; 102, 104) which, in dependence upon the position of the rotor, are commutated in order to power the at least one phase (25) in dependence upon the rotor position, a current break (32) being produced between each two successive current impulses,
and with driver stages (54, 58; 54, 94; 126, 127), associated with the switching members (72, 73; 102, 104),
characterized in that the driver stages each have an electronic semiconductor switch which in its conducting state essentially short-circuits the input of the associated switching member (72, 73; 102, 104) and thereby blocks the latter,

that the driver stages are further associated with respective sources (59, 63; 88, 90, 95; 129, 135) of substantially constant current, preferably of the order of few milliamps, from which an actuating current flows to the associated switching member (72, 73; 102, 104) when the electronic semiconductor switch of the respective driver stage is non-conducting,

and that a capacitance (64, 66; 87; 148, 149) is connected to the output (J1, J2; 128, 137) of at least one driver stage (54, 58; 54, 94; 126, 127) in order to delay the actuation of the associated switching member (72, 73; 102, 104).

2. Motor according to claim 1, characterised in that a common capacitance (87) is provided for two driver stages (54, 94), the capacitance being connected between the outputs (J1, J2) of these two driver stages (54, 94) in order to delay the actuation of the switching member (72, 73) about to be actuated and associated with one of these driver stages (54, 94) (Fig. 4 and 5).

3. Motor according to claim 1 or 2, characterised in that the voltage rise at the output of at least one driver stage (126, 127) is adapted to be limited by an additional signal (at the input 134).

4. Motor according to claim 3, characterised in that, for the production of the additional signal, a temperature-dependent sensor (143; 144') is provided in order to control the rotational speed of the motor in dependence upon the temperature (Fig. 6, 9).

5. Motor according to one or more of the preceding claims, characterised in that the switching members serving for energizing the at least one phase (25) are formed as transistor devices (102, 104) with high current amplification.

6. Motor according to claim 5, characterised in that the transistor devices comprise a common, preferably low resistance emitter resistance (103, 160) connecting them to a current supply lead (45).

7. Motor according to one or more of the preceding claims, in which the rotor-position sensing arrangement comprises a Hall effect sensor (112),

characterised in that the Hall effect sensor (112) and the driver stages (126, 127) are connected together in an integrated circuit.

8. Motor according to one or more of the preceding claims, characterised in that the rotor-position sensing arrangement comprises a Hall-IC (112) which is controllable by the magnetic field of the rotor magnet (13) and which produces a square wave signal (80) at its output (55) on passage of a magnetic pole of the rotor.

9. Motor according to one or more of the preceding claims, characterised in that two transistors (72, 73) of a full bridge circuit (40') are connected to the outputs (J1, J2) of the driver stages,

and that the two other transistors (70, 71) of this full bridge circuit (40') are controllable by the outputs of said first-mentioned transistors (72, 73).

10. Use of a motor according to one or more of the preceding claims for driving a fan (17), particularly an apparatus fan of axially short construction.

**Revendications**

1. Moteur à courant continu sans collecteur comportant

un enroulement statorique présentant au moins une phase (25),

un rotor à aimant permanent (11),

un dispositif capteur de position de ce rotor (32; 100; 100'; 100"),

un dispositif à semiconducteurs (40; 40'; 102, 104; 165) servant à commander l'alimentation de l'enroulement statorique et présentant au moins deux éléments de commutation (72, 73; 102, 104) qui sont commutés en fonction de la position du rotor (11) pour alimenter la phase ou les phases (25) en fonction de cette position, un intervalle de repos (82) étant produit chaque fois entre deux impulsions de courant successives,

et des étages pilotes (54, 58; 54, 94; 126, 127) associés aux éléments de commutation (72, 73; 102, 104),

caractérisé en ce que les étages pilotes présentent chacun un commutateur électronique à semiconducteurs qui, à l'état passant, court-circuite pratiquement l'entrée de l'élément de commutation (72, 73; 102, 104) associé à lui et bloque ainsi celui-ci; en ce qu'à chacun des étages pilotes est en outre associée une source (59, 63; 88, 90, 95; 129, 135) de courant sensiblement constant, de préférence de l'ordre de quelques milliampères, d'où un courant de déblocage va à l'élément de commutation associé (72, 73; 102, 104) lorsque le commutateur électronique à semiconducteurs de l'étage pilote associé n'est pas passant; et en ce qu'un condensateur (64, 66; 87; 148, 149) destiné à retarder le déblocage de l'élément de commutation associé (72, 73; 102, 104) est connecté à la sortie ($J_1$, $J_2$; 128, 137) d'au moins un étage pilote (54, 58; 54, 94; 126, 127).

2. Moteur selon la revendication 1, caractérisé en ce que, pour deux étages pilotes (54, 94), est prévu un condensateur commun (87) qui est monté entre les sorties ($J_1$, $J_2$) de ceux-ci pour retarder le déblocage de l'élément de commutation (72, 73) associé à l'un de ces étages pilotes (54, 94) qui va être débloqué (figures 4 et 5).

3. Moteur selon l'une des revendications 1 et 2, caractérisé en ce que l'excursion de tension à la sortie d'au moins un étage pilote (126, 127) est limitée par un signal supplémentaire (à l'entrée 134).

4. Moteur selon la revendication 3, caractérisé en ce que, pour la production du signal supplémentaire, il est prévu un capteur subordonné à la température (143; 144') afin de commander la vitesse du moteur en fonction de la température (figures 6 et 9).

5. Moteur selon une ou plusieurs des revendications précédentes, caractérisé en ce que les éléments de commutation servant à alimenter la phase ou les phases (25) sont des dispositifs à transistor (102, 104) à amplification de courant élevée.

6. Moteur selon la revendication 5, caractérisé en ce que les dispositifs à transistor sont pourvus d'une résistance d'émetteur commune (103;160) de préférence de faible valeur par laquelle ils sont reliés à une ligne (45) de l'alimentation.

7. Moteur selon une ou plusieurs des revendications précédentes, dans lequel le dispositif capteur de position du rotor est un capteur à effet Hall (112), caractérisé en ce que ce capteur à effet Hall (112) et les étages pilotes (126, 127) sont groupés dans un circuit intégré.

8. Moteur selon une ou plusieurs des revendications précédentes, caractérisé en ce que le dispositif capteur de position du rotor est un circuit intégré à effet Hall (112) commandé par le champ ------magnétique de l'aimant (13) du rotor et qui, au passage devant lui d'un pôle de l'aimant du rotor, produit à sa sortie (55) un signal rectangulaire (80).

9. Moteur selon une ou plusieurs des revendications précédentes, caractérisé en ce qu'aux sorties (J1, J2) des étages pilotes sont connectés deux transistors (72, 73) d'un montage en pont complet (40') et que les deux autres transistors (70, 71) de ce montage en pont complet (40') sont commandés à partir des sorties des transistors cités en premier lieu (72, 73).

10. Utilisation d'un moteur selon une ou plusieurs des revendications précédentes pour l'entraînement d'un ventilateur (17), en particulier d'un ventilateur d'appareil du type court axialement.

FIG.1

FIG. 3

A)

180°el. ←→ 180°el.

B)

$U_{66}$    $U_{th}$

C)

71+72 leiten    71+72 leiten

D)

$U_{64}$    $U_{th}$

E)

70+73 leiten    70+73 leiten

82    82    82

FIG. 2

FIG. 4

FIG. 5

FIG. 6

FIG.7

FIG.8

FIG. 9

FIG. 10

FIG. 11